# FASCICULE DE BREVET EUROPEEN

(11) **EP 3 455 156 B1**
(45) Date de publication et mention de la délivrance du brevet: **18.03.2020**
(21) Numéro de dépôt: 17803819.6
(22) Date de dépôt: 07.11.2017
(51) Int. Cl.: B66F 7/06, B64F 5/50, B66F 7/08

(54) **BASE MOBILE ET PROCEDE DE TRANSPORT D'UN EQUIPEMENT**
BEWEGLICHE BASIS UND VERFAHREN ZUM TRANSPORT EINER AUSRÜSTUNG
MOVABLE BASE AND METHOD FOR TRANSPORTING EQUIPMENT

(30) Priorité: 09.11.2016 FR 1660869; 13.06.2017 FR 1755319
(43) Date de publication de la demande: 20.03.2019
(73) Titulaire: Excent France, 31770 Colomiers (FR)
(72) Inventeur: DUPEYRON, Nicolas, 31480 Caubiac (FR); BRAULT, Baptiste, 31400 Toulouse (FR)
(74) Mandataire: Argyma
(86) Numéro de dépôt international: PCT/EP2017/078395
(87) Numéro de publication internationale: WO 2018/087057

(56) Documents cités:
- EP-A2- 2 165 932
- DE-A1- 19 612 626
- FR-A1- 3 008 070
- US-A- 2 471 901
- US-B1- 6 485 247

## Description

### DOMAINE TECHNIQUE GENERAL ET ART ANTERIEUR

La présente invention concerne le domaine des équipements de pose et de dépose d'un moteur d'aéronef, notamment, au cours d'une opération de maintenance.

De manière connue, un aéronef comporte plusieurs moteurs qui servent à la propulsion de l'aéronef. Un moteur est un équipement technologique crucial d'un aéronef qui doit être inspecté périodiquement de manière précise. A cet effet, il est nécessaire de démonter le moteur de l'aéronef pour le contrôler (étape de dépose) puis de le remonter après le contrôle (étape de pose).

Les étapes de pose et de dépose sont des étapes critiques et complexes étant donné qu'un moteur peut peser plusieurs tonnes et que sa connexion à l'aéronef doit être réalisée avec précision.

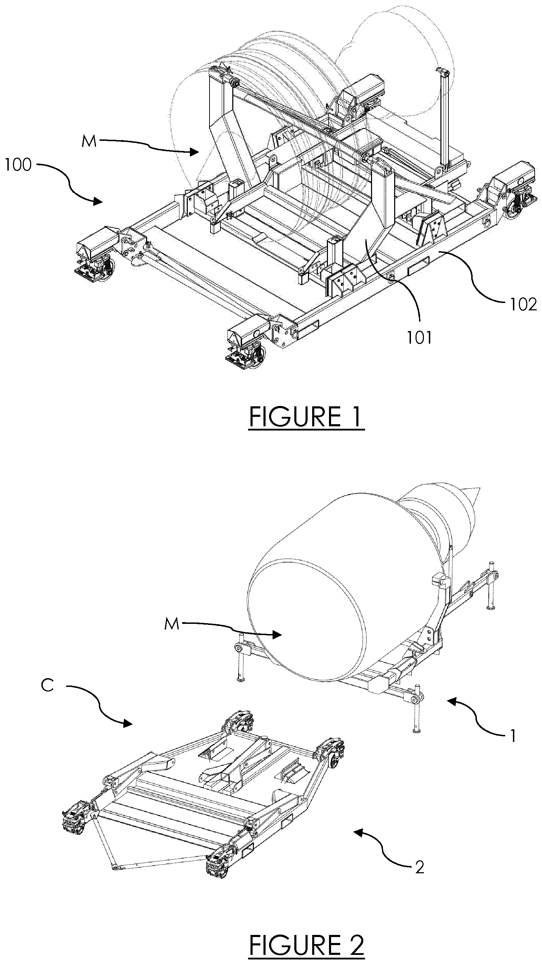

Dans l'art antérieur, en référence à la figure 1, afin de poser un moteur M sur son aéronef, le moteur M est tout d'abord placé dans un chariot de transport 100 équipé de roues afin de permettre le déplacement du moteur M dans un hangar. Le chariot de transport comporte un berceau de réception 101 dans lequel le moteur M est maintenu de manière stable. Puis, le chariot de transport 100 est élevé au moyen de câbles connu de l'homme du métier sous la désignation anglaise « bootstrap » ou par des supports télescopiques équipés de fourches. Autrement dit, il est nécessaire de disposer, d'une part, d'un moyen de transport et, d'autre part, d'un moyen de levage.

Afin d'éliminer cet inconvénient logistique et financier, il a été proposé, par la demande de brevet DE3427042A1, un chariot de transport intégrant des moyens de levage. Un tel chariot de transport présente un coût élevé étant donné qu'il intègre les moyens de levage. En outre, le berceau ne convient qu'à un seul type de moteur et il est nécessaire, lorsque cela est possible, de prévoir des adaptateurs si un moteur différent doit être supporté, ce qui augmente les coûts et les risques d'erreurs.
L'invention a donc pour but de remédier à ces inconvénients en proposant un nouvel outil pour le transport, la pose et la dépose d'un moteur d'aéronef qui puisse accélérer les cadences de pose/dépose tout en offrant une ergonomie accrue et un coût limité.

### PRESENTATION GENERALE DE L'INVENTION

L'invention concerne une base mobile pour le transport d'un équipement selon les revendications.

De préférence, les moyens de levage d'une branche latérale comportent au moins un organe de levage s'étendant vers l'autre des deux branches latérales. Ainsi, les moyens de levage permettent de supporter latéralement un équipement, ce qui facilite son inclinaison. Un tel dispositif est connu du document US 6485247.

De manière préférée, l'organe de levage s'étend à une hauteur du sol comprise entre 0 cm et 20 cm lorsque les moyens de levage sont baissés. Ainsi, l'organe de levage peut se glisser dans une cavité ou un relief de l'équipement afin de le lever de manière pratique, même, lorsque ce dernier repose sur le sol. De préférence, les moyens de levage sont configurés pour réaliser un déplacement vertical au moins égal à 100 cm.

De manière préférée, l'organe de levage possède une forme de L afin de s'étendre à l'altitude basse pour lever un équipement.

De préférence, chaque branche latérale comporte au moins deux organes de levage écartés l'un de l'autre selon la longueur de ladite branche latérale afin de répartir les efforts de levage et faciliter l'inclinaison.

De préférence encore, l'ossature possède une forme de U définissant une base et deux branches latérales. Une forme en U définit avantageusement une cavité dans laquelle peut être positionnée un équipement à soulever.

Selon un aspect préféré, les moyens de levage d'une branche latérale comportent au moins deux mécanismes de levage indépendants reliés à ladite branche latérale de manière à permettre une inclinaison. De préférence, chaque mécanisme de levage comporte un capteur de force de manière à assurer le contrôle des déplacements.

Selon un aspect de l'invention, la base comporte des moyens de déplacement fin, indépendants des moyens de roulement, configurés pour supporter l'ossature sur le sol. De préférence, les moyens de déplacement fin comportent des billes de roulement, de manière préférée intégrés dans des pieds de vérin. De tels moyens de déplacement fin permettent de conférer de la souplesse pour la pose/dépose de l'équipement.

Selon un autre aspect de l'invention, les moyens de levage de chaque branche latérale comportent des moyens de déplacement fin configurés pour apporter de la souplesse lors de la pose/dépose de l'équipement. Ainsi, la partie inférieure de la base mobile ne se déplace pas, la souplesse est fournie uniquement en partie supérieure.

De manière préférée, lorsque les moyens de levage se présentent sous la forme d'un bras de levage, les moyens de déplacement fin sont situés en partie supérieure du bras de levage de manière à fournir de la souplesse au plus près du moteur lors de sa pose et de sa dépose. Cela permet avantageusement aux opérateurs de disposer d'un jeu pour la pose/dépose qui peut être utilisé de manière pratique à hauteur d'homme.

De préférence, les moyens de déplacement fin comportent une pluralité de bielles configurées permettre un déplacement fin dans plusieurs directions à la manière d'une balançoire ou d'un pendule. De manière préférée, les bielles sont configurées pour autoriser un déplacement dans le plan horizontal d'au moins 10 mm par rapport à une position d'équilibre. De préférence, les extrémités de chaque bielle sont connectées par une liaison rotule.

De préférence, chaque bielle possède une longueur comprise entre 250mm et 450mm.
Selon un aspect préféré, chaque bras de levage comporte un plateau et des mécanismes de levage reliés à aux extrémités du plateau par des moyens de déplacement fin, en particulier, au moins une bielle, de préférence, deux bielles.

De manière préférée, chaque bras de levage comporte un plateau et deux mécanismes de levage reliés aux extrémités du plateau, chaque mécanisme de levage est relié à une extrémité du plateau par deux bielles.

L'invention concerne également un système de déplacement fin d'un équipement. Le système de déplacement comporte au moins un organe de support dudit équipement et un châssis, mobile ou fixe, qui est relié audit organe de support par au moins trois bielles comportant des rotules à leurs extrémités de manière à permettre un support pendulaire dudit équipement afin de le déplacer de manière pratique et ergonomique.

De manière préférée, le système de déplacement fin peut être intégré dans une base mobile ainsi que dans d'autres outils adaptés pour déplacer ou positionner un équipement de manière précise.

De préférence, les branches latérales sont configurées pour être écartées d'au moins 200 cm, de préférence, d'au moins de 250 cm. De manière préférée, l'écartement minimal intérieur est inférieur à 160 cm pour faciliter le transport routier sur remorque. En effet, l'encombrement en largeur est ainsi inférieur à 250 cm pour rentrer dans un camion plateau.

L'invention concerne également un procédé de transport d'un équipement au moyen d'une base mobile telle que présentée précédemment, le procédé comportant :
- une étape de positionnement des branches latérales de l'ossature de manière à ce que l'équipement se situe entre lesdites branches latérales;
- une étape de rapprochement des branches latérales de manière à coopérer avec ledit équipement ;
- une étape de levage de l'équipement par les moyens de levage afin que ledit équipement soit supporté par ladite base mobile, et
- une étape de déplacement de ladite base mobile sur le sol de manière à déplacer ledit équipement.

Le transport est réalisé de manière sécurisée au moyen de la base mobile qui permet de saisir l'équipement avant de lever et/ou l'incliner.

L'invention concerne également un chariot de transport pour moteur d'aéronef comprenant un berceau de réception d'un moteur d'aéronef et une base mobile adaptée pour supporter ledit berceau de réception et le déplacer sur le sol.

L'invention est remarquable en ce que le berceau de réception et la base mobile sont indépendants et adaptés pour être reliés de manière amovible.

Ainsi, de manière avantageuse, le berceau de réception peut être utilisé de manière indépendante de la base mobile, notamment, pour stocker de manière temporaire un moteur d'aéronef. De même, la base mobile peut être utilisée de manière indépendante du berceau de réception afin de se connecter à un autre berceau de connexion. Avantageusement pour déposer un premier moteur d'aéronef et poser un deuxième moteur d'aéronef, il peut être utilisé deux berceaux de réception mais uniquement une base mobile, ce qui procure un gain financier et logistique.

De préférence, le berceau de réception comporte une ossature pour recevoir un moteur d'aéronef et des pieds de support adaptés pour surélever ladite ossature par rapport au sol. Ainsi, lors du stockage temporaire d'un moteur, celui-ci est surélevé par rapport au sol de manière à être aisément transporté ultérieurement au moyen d'un dispositif de levage ou au moyen de la base mobile. De plus, cela permet d'éviter au moteur d'aéronef d'être en contact avec les poussières du sol.

De préférence encore, les pieds de support sont adaptés pour se déplacer entre une position rentrée de transport et une position sortie de stockage. Ainsi, l'encombrement du berceau de réception est réduit lorsqu'il est relié à la base mobile afin de permettre le positionnement du chariot de transport sous un moteur. Lorsque le berceau de réception est utilisé de manière indépendante, les pieds de supports sont déployés de manière à augmenter l'envergue au sol et donc la stabilité, ce qui est avantageux compte tenu de la masse d'un moteur d'aéronef.

De préférence, chaque pied de support comporte une partie pivotante. De préférence encore, chaque pied de support comporte une partie coulissante. Ainsi, chaque pied de support peut être escamoté en position rentrée. De manière préférée, le berceau de réception comporte au moins 3 pieds, de préférence, 3 ou 4.

Selon un aspect préféré, la base mobile comporte des moyens de levage configurés pour déplacer verticalement ledit berceau de réception de manière à permettre la pose et la dépose du moteur d'aéronef. Autrement dit, les moyens de levage sont intégrés directement à la base mobile, ce qui évite de recourir à des moyens rapportés. Cela est particulièrement avantageux étant donné que la base est indépendante du berceau de réception. Ainsi, pour manipuler plusieurs moteurs d'aéronef, il n'est pas nécessaire de posséder plusieurs chariots comportant des moyens de levage comme dans l'art antérieur. De préférence, les moyens de levage sont configurés pour réaliser un déplacement vertical au moins égal à 100cm.

De préférence, les moyens de levage sont adaptés pour être reliés de manière amovible audit berceau de réception. Ainsi, le berceau de réception peut être utilisé de manière indépendante et posséder un coût réduit étant donné que les moyens de levage appartiennent à la base mobile.

Selon un aspect particulier, les moyens de levage comportent une pluralité de bras de levage, de préférence, au moins trois bras de levage afin de lever de manière équilibrée un berceau tout en permettant son inclinaison selon 2 axes.

De manière préférée, chaque bras de levage est adapté pour réaliser un déplacement de cinématique de type « Scott Russel », de préférence, par actionnement horizontal. Ainsi, la course de déplacement vertical du bras est élevée tout en ayant un encombrement limité en hauteur.

De manière préférée, la base mobile comprend une ossature et des moyens de roulement au sol. Ainsi, la base mobile peut être simplement déplacée. De préférence, les moyens de levage sont fixés à ladite ossature.

De préférence, le berceau de réception est configuré pour être relié à la base mobile selon une première configuration de transport et selon une deuxième configuration de levage. La liaison entre le berceau de réception et la base mobile est différente en fonction de l'utilisation du chariot.

De préférence encore, la base mobile comprend des moyens d'amortissement adaptés pour coopérer avec le berceau de réception selon la première configuration de transport. Ainsi, lors du transport, les vibrations sont amorties par la base mobile et ne sont ainsi pas transmises au moteur d'aéronef.

De manière préférée, les moyens de levage comportent des organes de liaison adaptés pour coopérer avec le berceau de réception selon la deuxième configuration de levage. De préférence, seuls les moyens de levage sont reliés au berceau de réception.

De préférence, le berceau de réception comporte des bras de support adaptés pour maintenir stable un moteur d'aéronef disposé dans ledit berceau de réception.

L'invention concerne également un ensemble d'un moteur d'aéronef et d'un chariot de transport tel que présenté précédemment, le moteur d'aéronef étant disposé dans le berceau de réception.

L'invention concerne en outre un procédé de transport d'un moteur d'aéronef au moyen d'un chariot de transport tel que présenté précédemment, le moteur d'aéronef étant disposé dans le berceau de réception dans une position de stockage, le procédé comportant :
- une étape de connexion de la base mobile avec le berceau de réception afin que ledit berceau de réception soit supporté par ladite base mobile, et
- une étape de déplacement de ladite base mobile sur le sol de manière à déplacer le moteur d'aéronef disposé dans le berceau de réception.

Ainsi, le berceau de réception peut être utilisé de manière indépendante pour supporter un moteur d'aéronef, ce qui est avantageux. La base mobile pouvant ainsi être utilisée avec plusieurs berceaux de réception et reliée/connectée à un berceau de réception uniquement lors du transport et du levage.

De manière préférée, le procédé comporte une étape levage dudit berceau de réception par ladite base mobile de manière à permettre la pose du moteur d'aéronef. Ainsi, le chariot de transport permet de lever un moteur sans moyen technique additionnel.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un chariot de transport de moteur d'aéronef selon l'art antérieur ;
- la figure 2 est une représentation schématique d'un chariot de transport de moteur d'aéronef selon l'invention comprenant une base mobile et un berceau de réception qui sont déconnectés ;
- la figure 3 est une représentation schématique d'un chariot de transport de moteur d'aéronef selon l'invention comprenant une base mobile et un berceau de réception qui sont connectés ;
- les figures 4 et 5 représentent un berceau de réception en position de transport (figure 4) et en position de stockage (figure 5) ;
- la figure 6 est une représentation schématique rapprochée d'un bras de support d'un berceau de réception ;
- les figures 7 et 8 représentent une base mobile en position de transport (figure 7) et en position de levage (figure 8) ; et
- les figures 9 et 10 représentent une deuxième forme de réalisation d'un berceau de réception ;
- les figures 11A-11F représentent des étapes de stockage, de transport et de levage d'un moteur d'aéronef au moyen d'un chariot de transport selon l'invention.
- les figures 12-14 représentent une deuxième forme de réalisation d'une base mobile 2 ;
- la figure 15 représente une extrémité d'une branche latérale de la base mobile selon la deuxième forme de réalisation ;
- la figure 16 représente un pied de vérin comprenant des billes de roulement ;
- la figure 17 est une représentation schématique d'un organe de levage de la base mobile selon la deuxième forme de réalisation ;
- la figure 18 est une représentation schématique de la base mobile selon la deuxième forme de réalisation préalablement au levage d'un moteur ;
- la figure 19 est une représentation schématique de la base mobile selon la deuxième forme de réalisation lors du levage et de l'orientation d'un moteur ;
- les figures 20A-20F représentent des étapes de déplacement d'un moteur sur un plateau de camion au moyen d'une base mobile selon la deuxième forme de réalisation ;
- la figure 21 est une représentation en perspective d'une base mobile comportant des moyens de déplacement fin en partie supérieure,
- la figure 22 est une représentation rapprochée des moyens de déplacement fin de la figure 21,
- la figure 23 est une représentation schématique du support pendulaire par les moyens de déplacement fin.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

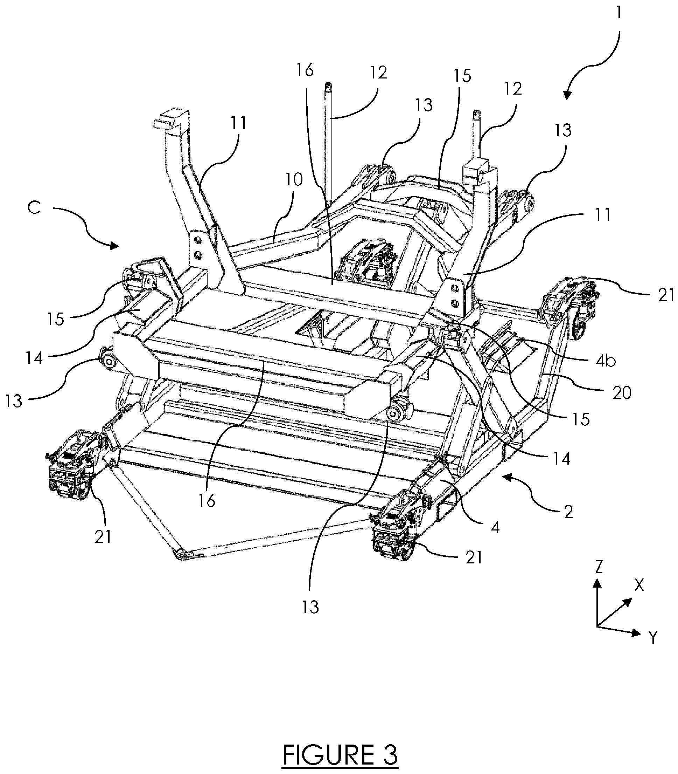

En référence aux figures 2 et 3, il est représenté d'un chariot de transport C de moteur d'aéronef M selon une forme de réalisation de l'invention. Comme cela sera présenté en détails par la suite, un tel chariot de transport C permet de réaliser de manière pratique et fiable des étapes de transport, de pose et de dépose d'un moteur d'aéronef M tout en limitant les coûts liés à la logistique. Pour rappel, un moteur d'aéronef M peut posséder une masse élevée, de l'ordre de 2 tonnes à 7 tonnes, et doit être monté de manière précise et contrôlée sur un aéronef.

L'invention va être présentée pour le transport d'un moteur mais elle s'applique pour le transport de tout équipement, notamment, aéronautique.

Le chariot de transport C comprend un berceau de réception 1 d'un moteur d'aéronef M et une base mobile 2 qui sont reliés de manière amovible. Ainsi, le berceau de réception 1 et la base mobile 2 peuvent être utilisés de manière indépendante. En particulier, un opérateur peut disposer d'une pluralité de berceaux de réception 1 afin de recevoir une pluralité de moteurs d'aéronef M et ne disposer que d'une unique base mobile 2 pour déplacer les berceaux de réception 1 lors des étapes de pose et de dépose.

Les dimensions du chariot de transport C sont adaptées pour posséder un encombrement vertical inférieur à 60 cm de manière à pouvoir être glissé sous un moteur M monté à un aéronef dont les capots des inverseurs de poussée sont ouverts.

Par la suite, en référence à la figure 3, le chariot de transport C va être présenté dans un repère (X, Y, Z) dans lequel l'axe X s'étend longitudinalement d'arrière en avant, l'axe Y s'étend latéralement de la gauche vers la droite et l'axe Z s'étend verticalement du bas vers le haut.

En référence plus particulièrement à la figure 3, le berceau de réception 1 comporte une ossature 10 sur laquelle sont montés des bras de support 11 et des bielles de support 12 afin de maintenir un moteur M de manière optimale. Dans cette forme de réalisation, l'ossature 10 se présente sous la forme d'une structure mécano-soudée, en particulier, mécanique, qui possède une résistance mécanique élevée de manière à pouvoir supporter une masse de plusieurs tonnes. Les bras de support 11 sont montés pivotants par rapport à l'ossature 10 de manière à faciliter la libération du moteur M lors d'une opération de pose/dépose comme cela sera présenté par la suite. Dans cette forme de réalisation, chaque bras de support 11 comporte à son extrémité supérieure un mors de serrage afin de bloquer la position du moteur M.

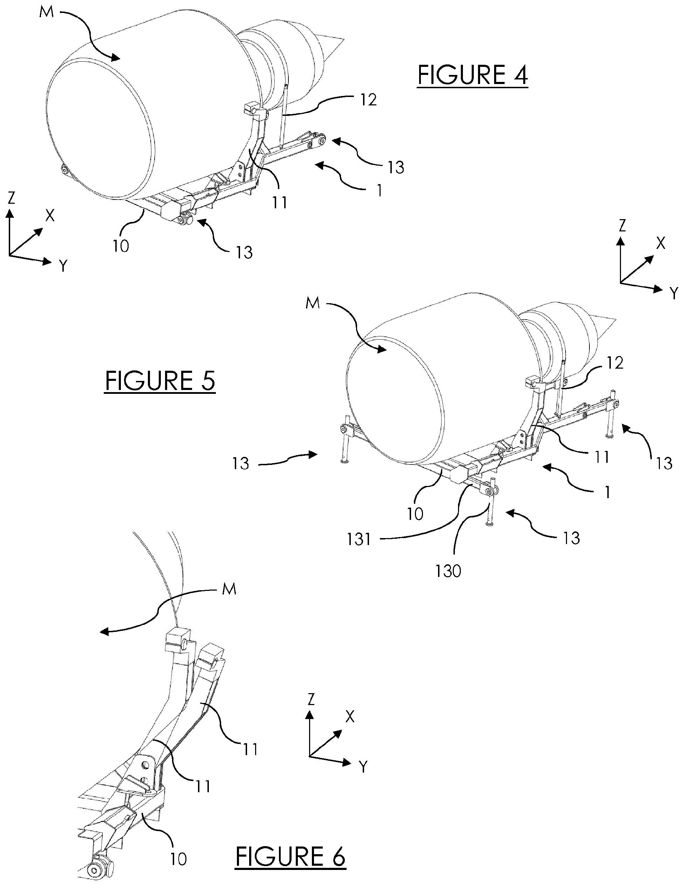

En référence à la figure 6, les bras de support 11 sont articulés sur l'ossature 10 autour d'un axe d'articulation longitudinal de manière à s'escamoter lors de la pose/dépose du moteur M afin de le libérer de l'espace.

Il va de soi que le nombre et la forme des bras de support 11 et des bielles de support 12 peuvent varier en fonction du moteur M à supporter.

Dans cette forme de réalisation, le berceau de réception 1 comporte en outre des pieds de support 13 adaptés pour surélever l'ossature 10 dudit berceau de réception 1 par rapport au sol, de préférence, d'une hauteur verticale comprise entre 30 cm et 70cm, de préférence, entre 40 cm et 60 cm, de manière préférée, de l'ordre de 50 cm. De tels pieds de support 13 permettent avantageusement de surélever le moteur M afin de placer la base mobile 2 sous le berceau de réception 1 pour le transporter. En outre, le moteur M est protégé des poussières ou autres polluants du sol.

Comme illustré aux figures 3 à 5, le berceau de réception 1 comporte quatre pieds de support 13 qui sont montés sur l'ossature 10. Dans cet exemple, le berceau de réception 1 comporte deux paires de pieds de support 13 (une paire avant et une paire arrière) mais il va de soi que le nombre et la position des pieds de support 13 pourraient être différents.

De manière avantageuse, les pieds de support 13 sont escamotables par rapport à l'ossature 10 entre une position rentrée et une position sortie. En position rentrée, comme illustré à la figure 4, les pieds de support 13 s'étendent horizontalement à proximité de l'ossature 10 pour présenter un encombrement minimal. En position sortie, comme illustré à la figure 5, les pieds de support 13 s'étendent verticalement pour écarter l'ossature 10 du sol. En position de sortie, les pieds de support 13 sont par ailleurs configurés pour s'écarter du centre de l'ossature 10 de manière à écarter les pieds de support 13 les uns des autres et ainsi améliorer la stabilité.

Dans cet exemple, en référence à la figure 5, chaque pied de support 13comporte un élément d'écartement 131 qui est monté coulissant dans l'ossature 13 afin de permettre d'écarter le pied de support 13 en position sortie comme présenté précédemment. De préférence, l'élément d'écartement 131 est adapté pour coulisser latéralement selon l'axe Y. Chaque pied de support 13 comporte en outre une béquille articulée 130 adaptée pour pivoter par rapport à son élément d'écartement 131 entre la position rentrée et sortie.

En référence à la figure 3, le berceau de réception 1 comporte en outre des fourreaux 16 solidaires de l'ossature 10 et configurés pour permettre l'insertion d'une fourche de levage afin de déplacer ledit berceau de réception 1. En référence à la figure 3, les fourreaux 16 s'étendent latéralement dans le berceau de réception 1 selon l'axe Y. Il va de soi que le berceau de réception 1 pourrait également comprendre des anneaux de levage pour être déplacée au moyen d'un crochet.

De manière préférée, un berceau de réception 1 est spécifique à chaque moteur d'aéronef M afin de le supporter de manière optimale. Il va de soi qu'il pourrait également être prévu des éléments d'adaptation pour adapter un berceau de réception 1 de forme standard à une pluralité de moteurs d'aéronef M.

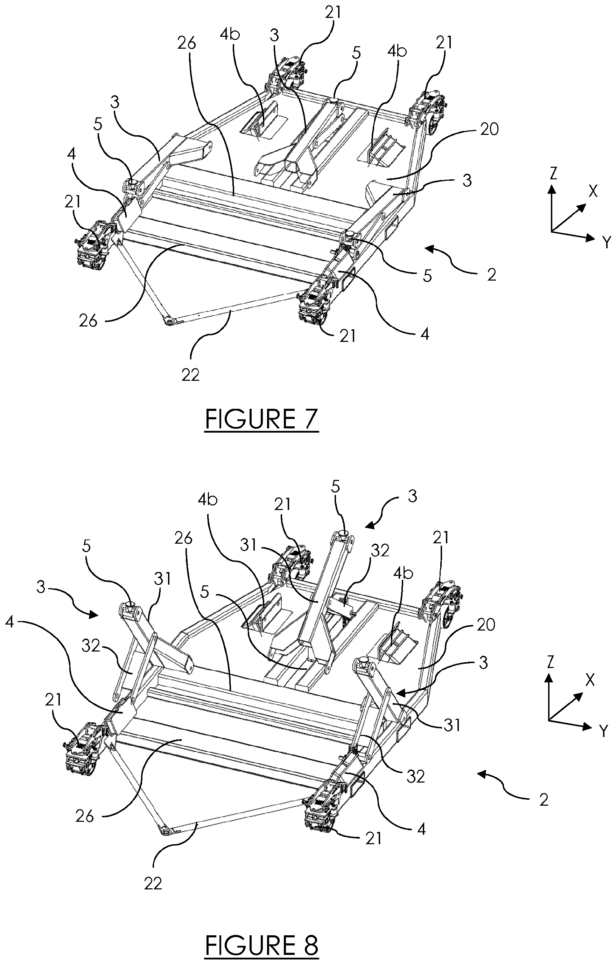

En référence aux figures 7 et 8, la base mobile 2 comporte une ossature20 de forme sensiblement parallélépipédique qui possède une résistance mécanique élevée de manière à pouvoir supporter une masse de plusieurs tonnes. L'ossature 20 est de préférence métallique.

La base mobile 2 comporte des moyens de roulement qui se présentent, dans cet exemple, sous la forme de quatre roues 21 (une paire avant et une paire arrière). Ainsi, la base mobile 2 peut être déplacée en roulant sur le sol. De préférence, les roues 21 sont équipées de freins afin de pouvoir immobiliser la base mobile 2 de manière sécurisée. Il va de soi que d'autres moyens de roulement pourraient convenir, notamment, des roues omnidirectionnelles type mécanum.

Dans cette forme de réalisation, la base mobile 2 comporte à son extrémité avant un timon 22 afin de permettre à la base mobile 2 d'être tractée. Néanmoins, la base mobile 2 pourrait également comprendre des moyens de déplacement autonome tels qu'un moteur.

De manière similaire au berceau de réception 1, la base mobile 2 comporte des fourreaux 26 solidaires de l'ossature 20 et configurés pour permettre l'insertion d'une fourche de levage afin de déplacer la base mobile 2. En référence aux figures 7 et 8, les fourreaux 26 s'étendent latéralement dans la base mobile 2 selon l'axe Y. Il va de soi que la base mobile 2 pourrait également comprendre des anneaux de levage pour être déplacée au moyen d'un crochet.

Toujours en référence aux figures 7 et 8, la base mobile 2 comporte en outre des moyens de levage configurés pour déplacer verticalement ledit berceau de réception 1 par rapport à l'ossature 20 de ladite base mobile 2 de manière à permettre la pose et la dépose du moteur d'aéronef M.

Dans cette forme de réalisation, les moyens de levage se présentent sous la forme de trois bras de levage 3 configurés pour soulever le berceau de réception 1 verticalement.

Dans cet exemple, chaque bras de levage 3 est configuré pour réaliser un déplacement de cinématique « Scott Russel » afin de permettre un déplacement vertical important par réalisation d'une course de commande horizontale qui limite l'encombrement général en hauteur. Néanmoins, il va de soi que d'autres cinématiques pourraient convenir, notamment, une cinématique à ciseaux.

Comme illustré aux figures 7 et 8, chaque bras de levage 3 comporte un premier élément 31 dont une extrémité inférieure est coulissante longitudinalement et adaptée pour s'articuler sur l'ossature 20 selon un axe d'articulation latéral et un deuxième élément 32 dont une extrémité supérieure est articulée au premier élément 31 selon un axe d'articulation latéral et dont l'extrémité inférieure est articulée sur l'ossature 20 de manière à guider le dressage du premier élément 31.De préférence, l'extrémité inférieure du premier élément 31 est équipée d'une roulette pour faciliter son déplacement longitudinal. Dans cet exemple, chaque bras de levage 3 comporte en outre un moteur configuré pour déplacer l'extrémité inférieure du premier élément 31 et, par voie de conséquence, la montée/descente dudit bras de levage 3. Chaque moteur est pilotable par un opérateur, de préférence, au moyen d'une télécommande.

De manière avantageuse, chaque bras de levage 3 peut être commandé de manière indépendante afin de lever verticalement le berceau de réception 1 mais également l'incliner dans les 2 axes afin de faciliter une opération de pose et de dépose. Un tel degré de liberté permet de faciliter l'orientation du moteur M. Dans cette forme de réalisation, les moyens de déplacement sont configurés pour réaliser un déplacement vertical d'au moins 100 cm, de préférence, d'au moins 150 cm. Par ailleurs, le degré d'inclinaison autorisé est de l'ordre de +/-5° autour de l'axe longitudinal X est +/-10° autour de l'axe latéral Y.

Chaque bras de levage 3 comporte en outre un organe de liaison 5 au berceau de réception 1 qui sera présenté par la suite.

Dans cette forme de réalisation, le berceau de réception 1 est adapté pour se relier à la base mobile 2 selon deux types de connexion différents en fonction du mode d'utilisation du chariot de transport C. Les deux types de connexion permettent une liaison amovible entre le berceau de réception 1 et la base mobile 2.

Le berceau de réception 1 est adapté pour se relier à la base mobile 2 selon un premier type de connexion lors du transport d'un moteur M.

A cet effet, en référence aux figures 7 et 8, la base mobile 2 comporte des moyens d'amortissement qui se présentent sous la forme d'une pluralité d'organes d'amortissement 4 montés sur l'ossature 20 de la base mobile 2 et configurés pour amortir les déplacements relatifs entre le berceau de réception 1 et la base mobile 2. De manière préférée, chaque organe d'amortissement 4 se présente sous la forme d'un élastomère ou d'une suspension. De manière préférée, le berceau de réception 1 comporte quatre organes d'amortissement 4 afin de réaliser un amortissement optimal, caler le moteur M et limiter son débattement latéral. La base mobile 2 comporte deux organes d'amortissement avant 4 comportant une paroi inclinée afin de permettre un calage et un centrage du berceau de réception 1. La base mobile 2 comporte en outre deux organes d'amortissement arrière4b adaptés pour s'étendre extérieurement au berceau de réception 1 en position de transport et ainsi limiter son débattement latéral.

Le berceau de réception 1 comporte des moyens de connexion primaires configurés pour coopérer avec les moyens d'amortissement de la base mobile 2. Dans cet exemple, en référence à la figure 3, les moyens de connexion primaire comportent deux organes de connexion primaire 14 se présentant chacun sous la forme d'une cale inclinée. Chaque organe de connexion primaire 14est fixé à l'ossature 10 du berceau de réception 1 et adapté pour correspondre avec les organes d'amortissement arrière 4 de la base mobile 2 lorsque le berceau de réception 1 est placé dans la base mobile 2.La partie arrière du berceau de réception 1 est par ailleurs maintenue latéralement entre les organes d'amortissement arrière 4b. Le berceau de réception 1 est ainsi supporté de manière sécurisée afin d'éviter la transmission de vibrations de la base mobile 2 au berceau de réception 1. La coopération des parois inclinées permet avantageusement un auto-centrage du berceau de réception 1 dans la base mobile 2.

Le berceau de réception 1 est adapté pour se relier à la base mobile 2 selon un deuxième type de connexion lors du levage d'un moteur M.

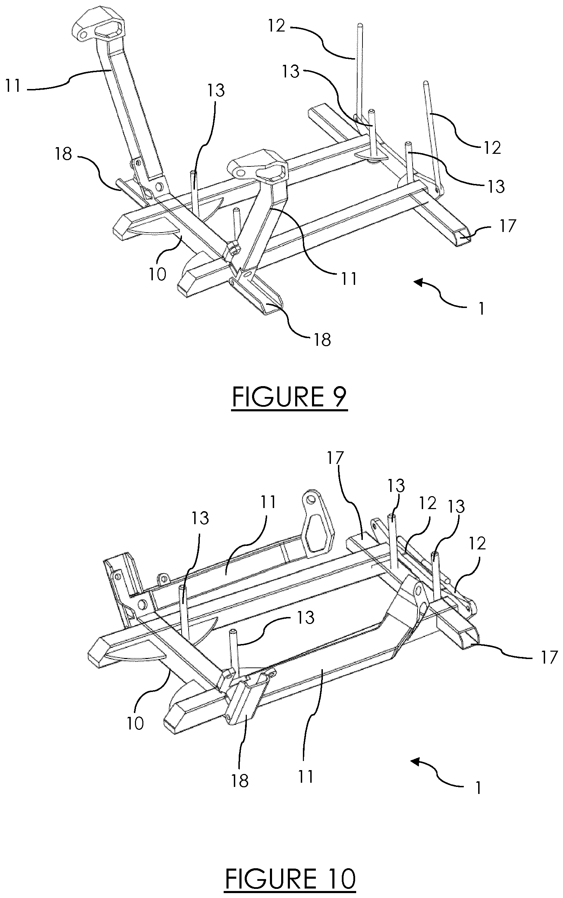

A cet effet, en référence aux figures 9 et 10, la base mobile 2 comporte, à l'extrémité de chaque bras de levage 3, un organe de liaison 5 configuré pour coopérer avec des moyens de connexion secondaire du berceau de réception 1. L'organe de liaison 5 se présente, dans cet exemple, sous la forme d'une rotule de manière à permettre un jeu d'inclinaison entre le berceau de réception 1 et la base mobile 2, ce qui permet d'offrir de la souplesse lors du levage et d'autoriser les inclinaisons.

Dans cet exemple, en référence à la figure 3, les moyens de connexion secondaire comportent trois organes de connexion secondaire 15 se présentant chacun sous la forme d'une paroi verticale adaptée pour être déplacée verticalement du bas vers le haut. Chaque organe de connexion secondaire 15 est fixé à l'ossature 10 du berceau de réception 1 et adapté pour correspondre avec les organes de liaison 5 des bras de levage 3.De manière avantageuse, lors de la manipulation du berceau de réception 1, l'ensemble des rotules permettent de contrôler l'inclinaison du berceau de réception 1. De plus, de telles rotules facilitent l'auto-centrage du berceau de réception 1 dans la base mobile 2. De manière préférée, la connexion des bras de levage 3 avec le berceau de réception 1 forme une liaison de Boys ou analogue afin d'obtenir une connexion isostatique.

De préférence, chaque bras de levage 3 est équipé d'au moins un capteur de force afin de mesurer, limiter et/ou enregistrer les efforts appliqués à chaque bras de levage 3.

De manière avantageuse, une même base mobile 2 peut coopérer avec tout berceau de réception 1 comportant de tels moyens de connexion. Autrement dit, une même base mobile 2 peut se connecter de manière universelle à différents types de berceau de réception 1 dont les bras de support 11 et les bielles de support 12 possèdent des caractéristiques différentes afin de s'adapter à des moteurs M différents.

Une deuxième forme réalisation d'un berceau de réception 1 est décrite en référence aux figures 9 et 10. Les références utilisées pour décrire les éléments de structure ou fonction identique, équivalente ou similaire à celles des éléments de la figure 3 sont les mêmes, pour simplifier la description. D'ailleurs, l'ensemble de la description du mode de réalisation de la figure 2 n'est pas reprise, cette description s'appliquant aux éléments des figures 9 et 10 lorsqu'il n'y a pas d'incompatibilités. Seules les différences notables, structurelles et fonctionnelles, sont décrites.

En référence aux figures 9 et 10, il est représenté une deuxième forme de réalisation d'un berceau de réception 1 dont les bras de support 11 sont escamotables de manière à s'étendre dans le plan de l'ossature 10 en position escamotée comme représenté à la figure 10. En particulier, les bras de support 11 sont adaptés pour se plier selon la longueur de l'ossature 10. De même, les bielles 12 sont aussi escamotables de manière à s'étendre dans le plan de l'ossature 10 en position escamotée comme représenté à la figure 10. En particulier, les bielles 12 sont adaptées pour se plier selon la largeur de l'ossature 10. Le berceau de réception 1 comporte également des pieds de support 13 se présentant sous la forme de béquilles escamotables.

Dans cette deuxième forme de réalisation, le berceau de réception 1 possède une structure simplifiée et ne comporte ni fourreaux, ni moyens de connexion primaire. Afin de permettre son déplacement par une base mobile 2, le berceau de réception 1 comporte des moyens de connexion secondaire comportant une pluralité de supports de levage, en particulier, quatre afin de permettre un levage équilibré. Les moyens de connexion secondaires comportent une paroi verticale, écartée du sol, de manière à pour être levée verticalement par la base mobile 2.

Dans cette deuxième forme de réalisation, l'ossature 10 comporte, à une première extrémité, des supports de levage se présentant sous la forme de tubes creux 17 dont l'ouverture est orientée latéralement et, à une deuxième extrémité, des supports de levage se présentant sous la forme d'une paroi plane18. Les supports de levage sont configurés pour s'escamoter dans l'ossature 10 en position de repos et pour se déployer, notamment lors du levage et/ou du support d'un moteur M. De préférence, les tubes creux 17 sont montés coulissants dans l'ossature 10 tandis que les parois planes 18 sont articulées. En position de repos, une pluralité de berceaux de réception 1, non utilisés, peuvent être gerbés afin de limiter leur encombrement.

Il va être dorénavant présenté une méthode de remplacement d'un premier moteur d'aéronef par un deuxième moteur d'aéronef dans un aéronef au moyen du chariot de transport C selon l'invention.

Tout d'abord, le chariot de transport C est en position de transport, le berceau de réception 1 étant monté sur les moyens d'amortissement de la base mobile 2.Le chariot de transport C est vide et est positionné sous la nacelle de l'aéronef à laquelle est suspendu le moteur d'aéronef à remplacer (désigné par la suite premier moteur M1).

De manière avantageuse, le chariot de transport C possède une dimension verticale réduite, inférieure à 60 cm, ce qui lui permet de se glisser de manière pratique sous de nombreux types de moteurs M avec les capots ouverts.

Une fois en position, la connexion entre le berceau de réception 1 et la base mobile 2 est modifiée. En effet, lors du transport, le berceau de réception 1 repose sur les organes d'amortissement 4 afin d'amortir les chocs et les vibrations. En vue de l'opération de dépose, les organes de liaison 5 des bras de levage 3 de la base mobile 2 sont connectés aux organes de connexion secondaire 15 du berceau de réception 1. A cet effet, les bras de levage 3 sont commandés de manière à soulever le berceau de réception 1. Le poids du berceau de réception 1 est alors supporté par les bras de levage 3.

Puis, les bras de levage 3 de la base mobile 2 sont de nouveau montés par l'opérateur, en particulier au moyen d'une télécommande, de manière à ce que le berceau de réception 1 soit déplacé verticalement vers le haut à proximité du premier moteur M1. Les bras de support 11 et les bielles de support 12 du berceau de réception 1 sont ensuite positionnés sur le premier moteur M1 afin de le maintenir. La connexion entre le berceau de réception 1 et la base mobile 2 permet d'offrir une flexibilité pour le positionnement, ce qui facilite la dépose. En effet, grâce aux bras de levage 3, le berceau de réception 1 peut être incliné faiblement autour des axes X et Y. Ensuite, le premier moteur M1 est déconnecté de l'aéronef afin d'être supporté par le chariot de transport C. Le poids du premier moteur M1 est alors supporté par la base mobile 2 via les bras de levage 3.De manière avantageuse, le contrôle du transfert de charge est assuré par les capteurs d'efforts.

Le premier moteur M1 est ensuite descendu par les bras de levage 3 de manière à ce que le berceau de réception 1 repose de nouveau sur les organes d'amortissement 4 de la base mobile 2 afin de pouvoir être transporté à distance de l'aéronef sans encombre. Dans cet exemple, le premier moteur M1 est déplacé, grâce à ses roues 21, dans un hangar en vue de sa révision. Les vibrations lors du transport sont avantageusement amorties par les organes d'amortissement 4.

Une fois que le chariot de transport C, supportant le premier moteur M1, est arrivé à destination, les bras de levage 3 sont montés de manière à ce que le poids du berceau de réception 1 soit supporté par les bras de levage 3. Les pieds de support 13 du berceau de réception 1 sont alors déployés puis les bras de levage 3 sont descendus de manière à ce que les pieds de support 13 viennent en appui sur le sol. Le poids du premier moteur M1 est alors supporté par les pieds de support 13. Lors de leur descente, les bras de levage 3 se déconnectent automatiquement du berceau de réception 1.

Le poids du premier moteur M1 n'est alors plus supporté par la base mobile 2 qui peut alors être retirée. Celle-ci est translatée longitudinalement afin de libérer le berceau de réception 1 et le premier moteur M1 peut alors stocké de manière indépendante.

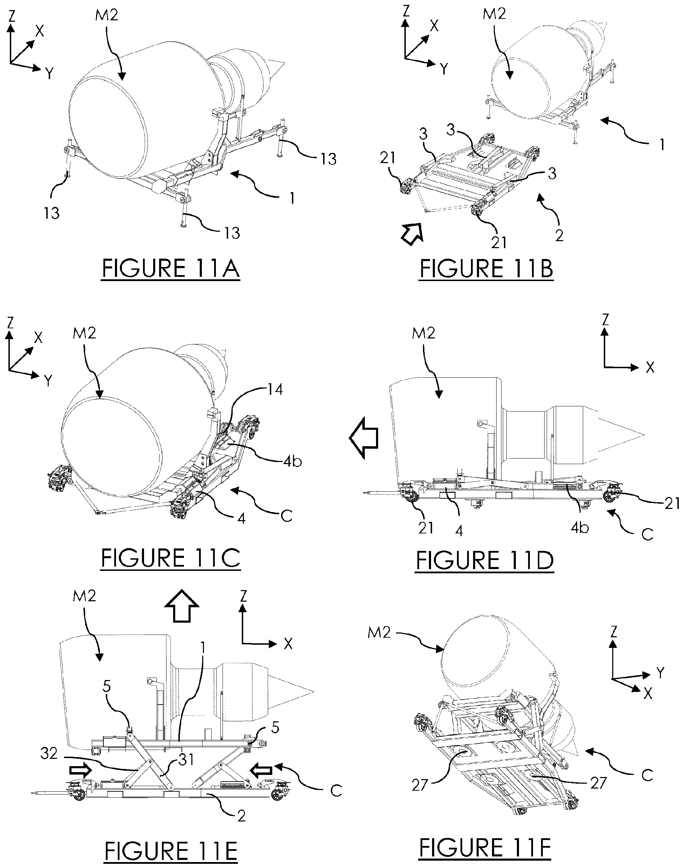

En référence aux figures 11A et 11B, la base mobile 2 peut ensuite être déplacée jusqu'à un autre berceau de réception 1 supportant le nouveau moteur à poser sur l'aéronef (désigné deuxième moteur M2).

Comme illustré à la figure 11B, la base mobile 2 est glissée sous le berceau de réception 1 du deuxième moteur M2 puis les bras de levage 3 sont montés de manière à ce que le poids du deuxième moteur M2 ne soit plus supporté par les pieds de support 13 mais par la base mobile 2. Les pieds de supports 13 sont alors escamotés en position rentrée puis les bras de levage 3 sont alors descendus de manière à ce que le berceau de réception 1 repose sur les organes d'amortissement 4 afin de déplacer le deuxième moteur M2 sous la nacelle de l'aéronef comme illustré aux figures11C et 11D.

Une fois en position, les moyens de connexion entre le berceau de réception 1 et la base mobile 2 sont modifiés, les bras de levage 3 de la base mobile 2 sont déployés de manière à lever le deuxième moteur M2 afin de le suspendre à la nacelle comme illustré à la figure 11E. Après mise en place du deuxième moteur M2, les bras de support 12 sont escamotés et le berceau de réception 1 est descendu de manière à limiter son encombrement et faciliter le retrait du chariot de transport C.

De manière avantageuse, la base mobile 2 est équipée de moyens de positionnement fin afin de permettre de déplacer sans effort le deuxième moteur M2 et ainsi réaliser de manière optimale la pose. Dans cet exemple, en référence à la figure 11F, les moyens de positionnement fin se présentent sous la forme d'organes de soufflage 27 disposés sous la base mobile 2 de manière à former des coussins d'air sous la base mobile 2. Il va de soi que d'autres moyens de positionnement fin pourraient convenir, notamment, des billes de roulement porteuses ou des plaques élastomères.

Grâce à l'invention, une unique base mobile 2 est utilisée pour déplacer les deux moteurs M1, M2, ce qui procure un gain financier et logistique. En outre, les moteurs qui ne sont pas transportés restent avantageusement maintenus dans un berceau de réception 1, ce qui permet leur transport par un autre équipement, notamment un appareil de levage à fourches. En outre, le chariot de transport 1 comporte ses propres moyens de levage, ce qui limite le nombre d'équipements nécessaires pour la pose et la dépose d'un moteur d'aéronef M1, M2.

De manière avantageuse, il peut être proposé une gamme de berceaux de réception 1 afin de pouvoir correspondre à chaque type de moteur d'aéronef M tout en pouvant être connecté de manière universelle à une base mobile 2. Il n'est plus nécessaire d'avoir des moyens de pose-dépose pour chaque type de moteur.

Le transport d'un moteur d'aéronef est ainsi simple, rapide, économique et fiable. De tels avantages permettent de limiter la durée des opérations de pose et de dépose, ce qui limite la durée d'immobilisation d'un aéronef, la rentabilité d'usage d'un aéronef est alors grandement améliorée.

Un tel chariot de transport C permet avantageusement d'améliorer les cadences de pose/dépose pour de nombreux acteurs aéronautiques, notamment, les avionneurs, les compagnies aériennes, les sociétés de réparation (MRO), les motoristes, les spécialistes des nacelles, etc. Le chariot de transport C est transportable par avion, hélicoptère, train ou par la route avec ou sans moteur. Le berceau de réception 1 est également transportable par transport routier et aérien, à cet effet, des amortisseurs supplémentaires peuvent être nécessaires.

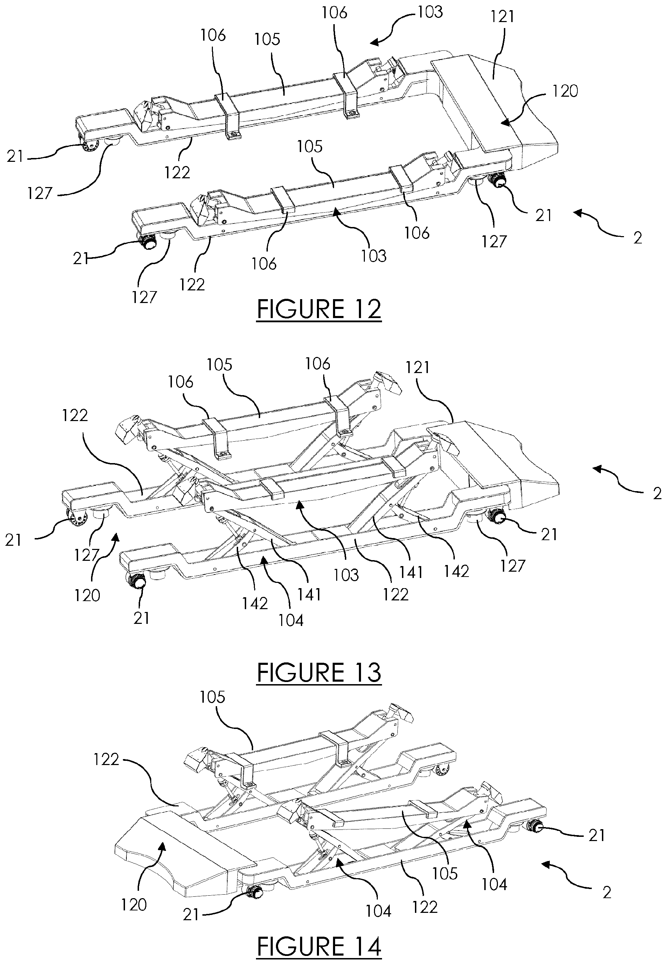

Une deuxième forme réalisation d'une base mobile 2 est décrite en référence aux figures 12 à 17. Les références utilisées pour décrire les éléments de structure ou fonction identique, équivalente ou similaire à celles des éléments des figures7-8 sont les mêmes, pour simplifier la description. D'ailleurs, l'ensemble de la description de la forme de réalisation des figures 7-8 n'est pas reprise, cette description s'appliquant aux éléments des figures 12 à 17 lorsqu'il n'y a pas d'incompatibilités. Seules les différences notables, structurelles et fonctionnelles, sont décrites.

Comme illustré aux figures 12 à 17, la base mobile 2 comporte une ossature 120 qui possède une résistance mécanique élevée de manière à pouvoir supporter une masse de plusieurs tonnes. L'ossature 120 possède une forme de U et définit un corps 121 et deux branches latérales 122 adaptées pour se déplacer parallèlement l'une par rapport à l'autre.

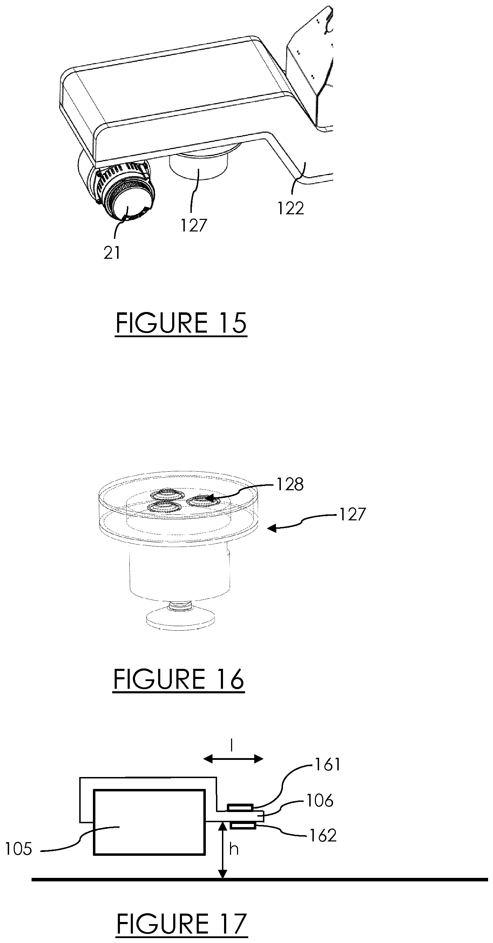

De manière analogue à précédemment, la base mobile 2 comporte des moyens de roulement, en particulier, des roues 21 comme illustré à la figure 15. De plus, la base mobile 2 est équipée de moyens de positionnement fin afin de permettre de déplacer sans effort l'ossature 120 et conférer de la souplesse lors de la pose/dépose d'un équipement. De manière préférée, des moyens de positionnement fin sont répartis à la surface inférieure de l'ossature 120, notamment, à proximité des moyens de roulement. Dans cet exemple, en référence aux figures15 et 16, les moyens de positionnement fin comportent un pied de vérin 127 adapté pour lever l'ossature 120 par rapport au sol, en particulier, de manière à ce que les moyens de roulement ne soient plus en contact avec le sol. En référence à la figure 16, les moyens de positionnement fin comportent en outre des billes de roulement 128 montées dans le pied vérin 127de manière à autoriser un roulement de l'ossature 120 lors de la pose/dépose quand les pieds de vérin 127 sont déployés.

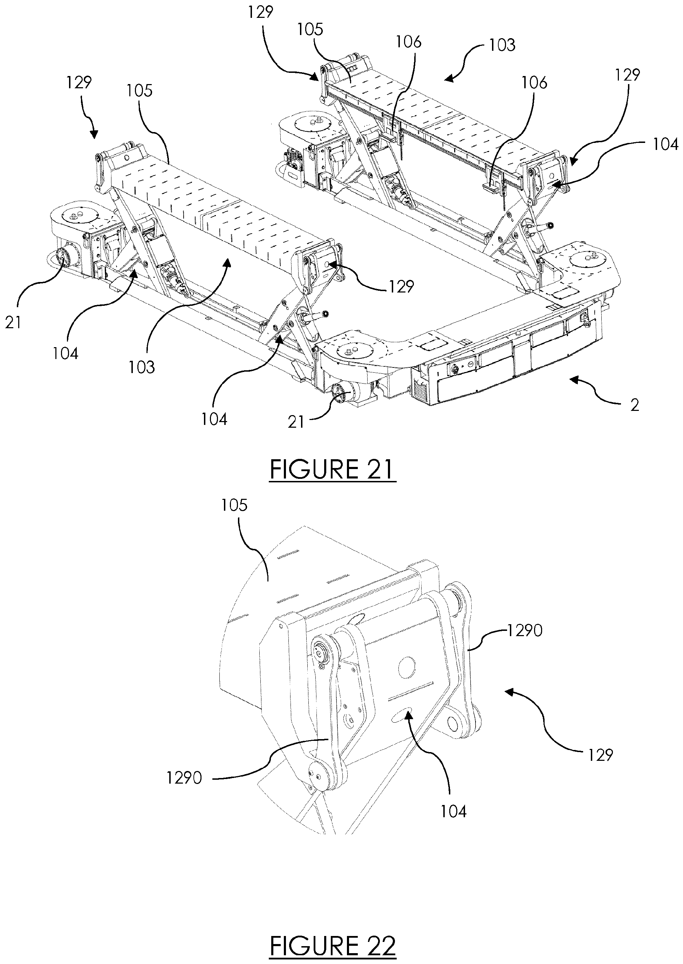

Selon un autre aspect de l'invention, en référence à la figure 21, les moyens de levage de chaque branche latérale 122 comportent des moyens de déplacement fin 129 configurés pour apporter de la souplesse lors de la pose/dépose de l'équipement. Ainsi, la partie inférieure de la base mobile 2 ne se déplace pas, la souplesse est fournie uniquement en partie supérieure. En référence aux figures 21 et 22, les moyens de déplacement fin 129 sont situés en partie supérieure du bras de levage 103 de manière à fournir de la souplesse au plus près du moteur lors de sa pose et de sa dépose. Chaque bras de levage 103 comporte un plateau 105 et des mécanismes de levage 104 reliés à aux extrémités du plateau 105 par les moyens de déplacement fin 129. Dans cet exemple, les moyens de déplacement fin 129 comportent une pluralité de bielles 1290 configurées pour permettre un déplacement fin dans plusieurs directions à la manière d'une balançoire ou d'un pendule. Chaque extrémité du plateau 105 est reliée au mécanisme de levage 104 par deux bielles 1290. Les extrémités de chaque bielle 1290 sont reliées au plateau 105 et au mécanisme de levage 104 par une liaison rotule. Les bielles avec rotule 1290 permettent un déplacement souple dans plusieurs directions pour orienter de manière optimale le moteur tout en étant supportée par le plateau 105. De manière préférée, chaque bielle 1290 possède une longueur comprise entre 250 et 450 mm, de préférence, de l'ordre de 350 mm. De manière avantageuse, une position d'équilibre est obtenue de manière naturelle du fait de la gravité. Il n'est pas nécessaire de recourir à des vérins de levage ou à des inclinomètres. Le système est avantageusement mécanique et passif, ce qui réduit le risque de dysfonctionnement. En outre, l'intégration des bielles 1290 permet de conserver une base mobile 2 compacte.

Il va de soi que les moyens de levage pourraient ne comprendre que trois bielles 1290 afin de permettre un support pendulaire de manière isostatique adapté pour supporter une charge excentrée par rapport au centre de gravité. L'utilisation de quatre bielles 1290 permet avantageusement d'augmenter la rigidité.

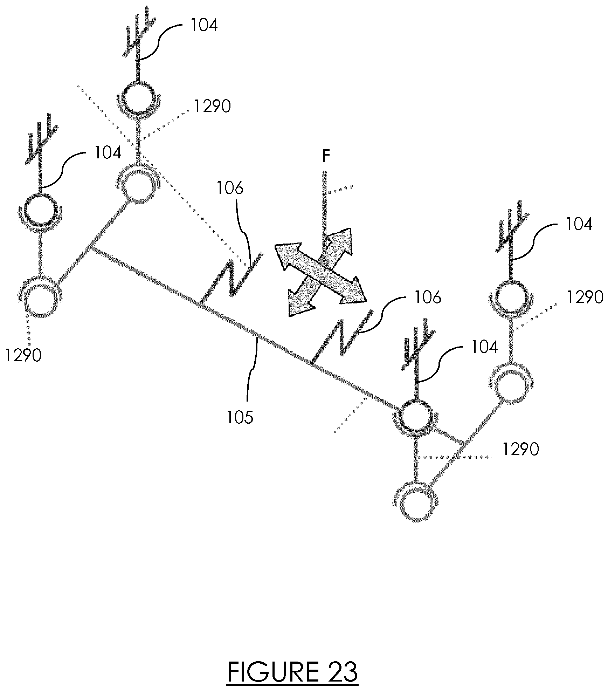

En référence à la figure 23, lors du support d'un moteur par les organes de levage 106, une charge F est appliquée au plateau 105 et transmise aux mécanismes de levage 104 par l'intermédiaire des bielles 1290 afin d'assurer un support pendulaire. Dans cet exemple, chaque extrémité du plateau 105 est reliée au mécanisme de levage 104 par une bielle 1290 travaillant en traction et une bielle 1290 travaillant en compression. Cela permet avantageusement aux opérateurs de disposer d'un jeu pour la pose/dépose qui peut être utilisé de manière pratique à hauteur d'homme. En pratique, un équipement de 7t peut être déplacé dans le plan horizontal de 15mm par rapport à la position d'équilibre.

Dans cette deuxième forme de réalisation, la base mobile 2 est remarquable en ce que les branches latérales 122 de l'ossature 120 sont configurées pour se déplacer l'une par rapport à l'autre de manière à modifier leur écartement afin de saisir un équipement et le lever. Dans cet exemple, les branches latérales 122 demeurent parallèles lors de leurs déplacements. De manière préférée, l'écartement entre les branches latérales 122 varie entre 200 cm et 250 cm.

Dans cette forme de réalisation, les deux branches latérales 122 de l'ossature 120 sont mobiles par rapport au corps 121 de l'ossature 120 mais il va de soi que seule une branche latérale 122 pourrait être mobile. De manière préférée, le corps 121 est creux et comporte les équipements pour déplacer et commander les branches latérales (moteur, module de communication radio, batteries, etc.).

De manière analogue à la première forme de réalisation, la base mobile 2 comporte des moyens de levage configurés pour déplacer verticalement et incliner un équipement par rapport à l'ossature 120 de manière à permettre la pose et la dépose dudit équipement.

Dans cette deuxième forme de réalisation, chaque bras latéral 122 comporte des moyens de levage. En référence aux figures 12 à 13, chaque bras latéral 122 comporte
un bras de levage 103 configuré pour soulever un équipement. Dans cet exemple, chaque bras de levage 103 peut être levé et incliné dans le plan vertical dans lequel s'étend le bras latéral 122 de l'ossature 120.

En référence à la figure 13, chaque bras de levage 103 comporte un plateau 105 relié à ses extrémités à des mécanismes de levage 104. Dans cet exemple, chaque mécanisme de levage 104 est configuré pour réaliser un déplacement de cinématique en ciseaux ou demi-ciseaux.

Comme illustré aux figures 13 et 14, chaque mécanisme de levage 104 comporte un premier élément 141 et un deuxième élément 142et un vérin de déplacement pour lever/descendre une extrémité du plateau 105. Chaque vérin de déplacement est pilotable par un opérateur, de préférence, au moyen d'une télécommande.

De manière avantageuse, chaque bras de levage 103 peut être commandé de manière indépendante afin de lever verticalement un équipement mais également l'incliner dans les 2 axes afin de faciliter une opération de pose et de dépose comme illustré à la figure 14. Un tel degré de liberté permet de faciliter l'orientation du moteur M. Dans cette deuxième forme de réalisation, les moyens de déplacement sont configurés pour réaliser un déplacement vertical d'au moins 100 cm, de préférence, d'au moins 150 cm. Par ailleurs, le degré d'inclinaison autorisé est de l'ordre de +/-5° autour de l'axe longitudinal X est +/-10° autour de l'axe latéral Y.

Dans cette deuxième forme de réalisation, chaque bras de levage 103 comporte en outre des organes de levage 106 d'un équipement, analogues à des fourches. En référence à la figure 12, deux organes de levage 106 sont positionnés sur le plateau 105 et s'étendent en saillie dans la cavité du U dont l'ossature 120 a la forme. De préférence, l'écartement longitudinal entre les organes de levage 106 d'un même bras de levage 103 est réglable. Ainsi, les organes de liaison 106 peuvent coopérer avec un équipement positionné entre les branches latérales 122.

En référence plus particulièrement à la figure 17, l'organe de levage 106 est solidaire du plateau 105 et comporte sur sa surface supérieure un revêtement 161 adapté pour ne pas endommager l'équipement à saisir, de préférence, un revêtement en élastomère. De préférence, l'organe de levage 106 comporte sur sa surface inférieure des moyens de roulement 162 afin d'autoriser un déplacement de l'organe de levage 106 sur une surface plane, ce qui est notamment avantageux pour le chargement d'un camion comme cela sera présenté par la suite. De préférence, en référence à la figure 17, l'organe de levage 106 s'étend latéralement en saillie sur une distance I comprise entre 10 cm et 20 cm. De préférence encore, l'organe de levage s'étend à une hauteur du sol comprise entre 0 cm et 20 cm lorsque les moyens de levage sont baissés.

Il va de soi que la base mobile 2 pourrait également comprendre des moyens d'amortissement tels que présentés précédemment.

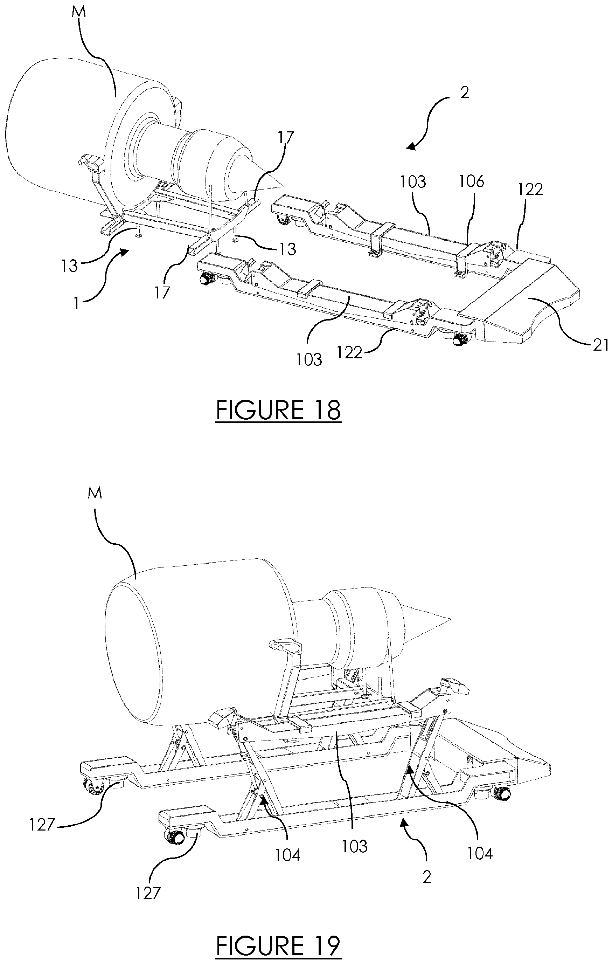

En référence aux figures 18 à 19, un moteur M est positionné sur un berceau de réception 1 selon la deuxième forme de réalisation de l'invention. La base mobile 2 est déplacée sur le sol de manière à ce que les branches latérales 122 s'étendent extérieurement au berceau de réception 1, c'est-à-dire, jusqu'à ce que le berceau de réception 1 s'étende dans la cavité du U dont l'ossature 120 a la forme.

Les branches latérales 122 de l'ossature 120 sont ensuite rapprochées de manière à ce que les organes de levage 106 coopèrent avec les supports de levage 17, 18 du berceau de réception 1. Les bras de levage 103 sont ensuite activés de manière à lever le berceau 1. Le poids du moteur M est alors porté par la base mobile 2 qui peut être déplacée à proximité de l'aéronef. Une fois en position sur le lieu de montage, les moyens de positionnement fins sont activés. Les pieds de vérin 127 sont descendus de manière à lever l'ossature 120 au-dessus du sol et la positionner sur les billes de roulement 128. L'ossature 120 peut alors être déplacée sans efforts par des opérateurs afin de monter le moteur M de manière précise et avec de la souplesse dans un mât moteur nacelle ouverte. Par ailleurs, chaque mécanisme de levage 104 est activé de manière indépendante afin d'orienter de manière précise le moteur M.

De manière avantageuse, la capacité d'écartement des branches latérales 122 permet de porter des berceaux, chariots et équipements de dimensions variées. De plus, une telle base mobile 2 de conception simple permet d'éviter toute interférence avec les capots de la nacelle de l'aéronef.

La base mobile 2, selon la deuxième forme de réalisation de l'invention, est particulièrement avantageuse pour le chargement d'un équipement, notamment un moteur, sur un camion en l'absence de quai de chargement.

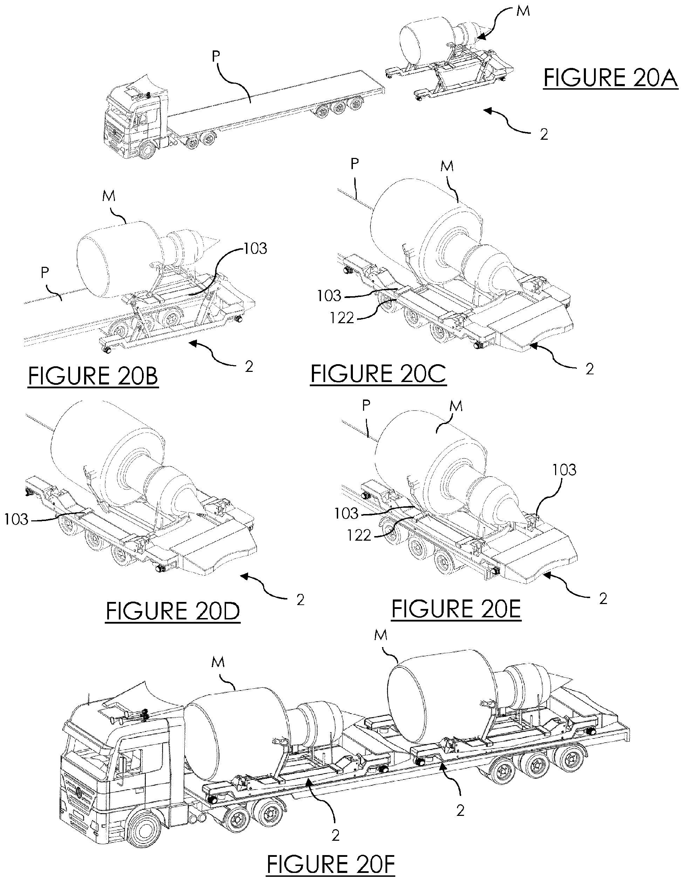

En référence aux figures 20A, il est représenté un camion comportant un plateau de chargement P qui s'étend à une hauteur de l'ordre de 100 cm par rapport au sol. Pour charger le moteur M, la base mobile 2, dont les branches latérales 122 sont écartées, déplace le moteur M avec ses bras de levage 103 en position haute horizontale de manière à introduire le plateau P du camion entre les branches latérales 122 et sous le berceau 1 du moteur M comme illustré à la figure 20B.

Les branches latérales 122 de l'ossature 120 sont ensuite rapprochées de manière à ce que les organes de levage 106 s'étendent au-dessus du plateau P. Puis, les bras de levage 103 sont baissés de manière à ce que les organes de levage 106viennent en appui sur le plateau 6. Par contre réaction, du fait de l'appui des organes de levage 106 et du rapprochement des bras de levage 103 de l'ossature 120, l'ossature 120 s'élève au-dessus du sol comme illustré à la figure 20C. Le berceau 1 étant en appui sur le plateau P, les supports de levage 17 sont escamotés afin de permettre aux branches latérales 122 de l'ossature 120 d'être rapprochées pour s'étendre au-dessus du plateau comme illustré à la figure 20D. Puis les branches latérales 22 sont rapprochées afin que la base mobile 2 s'étende sur le plateau P comme illustré à la figure 20E. Autrement dit, le moteur M et la base mobile 2 peuvent être montés depuis le sol sur un plateau P de camion sans effort et sans risque pour le moteur M.

De manière avantageuse, le moteur M peut ensuite être déplacé par la base mobile 2 sur le plateau P de manière sécurisée afin de pouvoir stocker, dans un même camion, une pluralité de moteurs M comme illustré à la figure 20F.

Il a été présenté la pose d'un moteur dans son berceau par la base mobile 2 mais il va de soi que d'autres équipements pourraient être déplacés par la base mobile 2, notamment, un train d'atterrissage, etc. De plus, la base mobile 2 est adaptée pour déplacer un moteur placé dans un chariot de transport selon l'art antérieur, les organes de levage 106 coopérant avec les fourreaux dudit chariot de transport.

## Revendications

1. Base mobile (2) pour le transport d'un équipement au sol, en particulier, un équipement aéronautique, la base mobile (2) comporte une ossature (120) comprenant deux branches latérales (122) adaptées pour se déplacer parallèlement l'une par rapport à l'autre de manière à modifier leur écartement et des moyens de roulement (21) au sol reliés à ladite ossature (120), chaque branche latérale (122) comportant des moyens de levage (103) configurés pour déplacer verticalement et incliner un équipement situé entre lesdites branches latérales (122), base mobile **caractérisée par le fait que**, les moyens de levage (103) se présentant sous la forme d'un bras de levage, chaque bras de levage comporte un plateau (105) et des mécanismes de levage (104) reliés aux extrémités du plateau (105) par des moyens de déplacement fin (129) configurés pour apporter de la souplesse lors de la pose/dépose de l'équipement.

2. Base mobile (2) selon la revendication 1, dans laquelle les moyens de levage (103) d'une branche latérale (122) comportent au moins un organe de levage (106) s'étendant vers l'autre des deux branches latérales (122).

3. Base mobile (2) selon la revendication 2, dans laquelle l'organe de levage (106) s'étend à une hauteur (h) du sol comprise entre 0 cm et 15 cm lorsque les moyens de levage (103) sont baissés.

4. Base mobile (2) selon l'une des revendications 2 et 3, dans laquelle chaque branche latérale (122) comporte au moins deux organes de levage (106) écartés l'un de l'autre selon la longueur de ladite branche latérale (122).

5. Base mobile (2) selon l'une des revendications 1 à 4, dans laquelle l'ossature (120) possède une forme de U définissant un corps (121) et deux branches latérales (122).

6. Base mobile (2) selon l'une des revendications 1 à 5, dans laquelle les moyens de levage (103) d'une branche latérale (122) comportent au moins deux mécanismes de levage indépendants (104) reliés à ladite branche latérale (122) de manière à permettre une inclinaison.

7. Base mobile (2) selon l'une des revendications 1 à 6, comportant des moyens de déplacement fin (127), indépendant des moyens de roulement (21), configurés pour supporter l'ossature (120) sur le sol.

8. Base mobile (2) selon la revendication 7, dans laquelle les moyens de déplacement fin (127) comportent des billes de roulement (128).

9. Base mobile (2) selon l'une des revendications 1 à 8, dans laquelle les branches latérales (122) sont configurées pour être écartées d'au moins 200 cm, de préférence, d'au moins de 250 cm.

10. Base mobile (2) selon l'une des revendications 1 à 9, dans laquelle les moyens de déplacement fin (129) comportent une pluralité de bielles (1290) configurées pour permettre un déplacement fin dans plusieurs directions à la manière d'une balançoire ou d'un pendule.

11. Base mobile (2) selon la revendication 10, dans laquelle les bielles (129) sont configurées pour autoriser un déplacement dans le plan horizontal d'au moins 10 mm par rapport à une position d'équilibre.

12. Base mobile (2) selon l'une des revendications 10 à 11, dans laquelle les extrémités de chaque bielle (1290) sont connectées par une liaison rotule.

13. Base mobile (2) selon l'une des revendications 10 à 12, dans laquelle chaque bielle (1290) possède une longueur comprise entre 250mm et 450mm.

14. Base mobile (2) selon l'une des revendications 10 à 13, dans laquelle chaque bras de levage comporte un plateau (105) et deux mécanismes de levage (104) reliés aux extrémités du plateau (105), chaque mécanisme de levage (104) est relié à une extrémité du plateau (105) par deux bielles (1290).

15. Procédé de transport (C) d'un équipement au moyen d'une base mobile (2) selon l'une des revendications 1 à 14, le procédé comportant :
- une étape de positionnement des branches latérales (122) de l'ossature (120) de manière à ce que l'équipement se situe entre lesdites branches latérales (122) ;
- une étape de rapprochement des branches latérales (122) de manière à coopérer avec ledit équipement ;
- une étape de levage de l'équipement par les moyens de levage (103) afin que ledit équipement soit supporté par ladite base mobile (2), et
- une étape de déplacement de ladite base mobile (2) sur le sol de manière à déplacer ledit équipement.

## Patentansprüche

1. Bewegliche Basis (2) für den Transport einer Ausrüstung am Boden, insbesondere einer aeronautischen Ausrüstung, wobei die bewegliche Basis (2) ein Gerüst (120) umfasst, das zwei seitliche Schenkel (122) umfasst, die geeignet sind, sich parallel zueinander derart zu verlagern, dass ihr Abstand geändert wird, und Rollmittel (21) am Boden, die mit dem Gerüst (120) verbunden sind, wobei jeder seitliche Schenkel (122) Hubmittel (103) umfasst, die konfiguriert sind, um eine Ausrüstung, die sich zwischen den seitlichen Schenkeln (122) befindet, vertikal zu verlagern und zu neigen, wobei die bewegliche Basis **dadurch gekennzeichnet ist, dass** die Hubmittel (103) in Form eines Hubarms vorliegen, wobei jeder Hubarm eine Platte (105) und Hubmechanismen (104) aufweist, die mit den Enden der Platte (105) durch Feinverlagerungsmittel (129) verbunden sind, die konfiguriert sind, um beim Aufladen/Abladen der Ausrüstung Flexibilität zu verleihen.

2. Bewegliche Basis (2) nach Anspruch 1, wobei die Hubmittel (103) eines seitlichen Schenkels (122) mindestens ein Huborgan (106) aufweisen, das sich zum anderen der zwei seitlichen Schenkel (122) erstreckt.

3. Bewegliche Basis (2) nach Anspruch 2, wobei sich das Huborgan (106) in einer Höhe (h) vom Boden zwischen 0 cm und 15 cm erstreckt, wenn die Hubmittel (103) abgesenkt sind.

4. Bewegliche Basis (2) nach einem der Ansprüche 2 und 3, wobei jeder seitliche Schenkel (122) mindestens zwei Huborgane (106) aufweist, die voneinander gemäß der Länge des seitlichen Schenkels (122) beabstandet sind.

5. Bewegliche Basis (2) nach einem der Ansprüche 1 bis 4, wobei das Gerüst (120) eine U-Form besitzt, die einen Körper (121) und zwei seitliche Schenkel (122) definiert.

6. Bewegliche Basis (2) nach einem der Ansprüche 1 bis 5, wobei die Hubmittel (103) eines seitlichen Schenkels (122) mindestens zwei unabhängige Hubmechanismen (104) aufweisen, die mit dem seitlichen Schenkel (122) derart verbunden sind, dass eine Neigung ermöglicht wird.

7. Bewegliche Basis (2) nach einem der Ansprüche 1 bis 6, aufweisend Feinverlagerungsmittel (127), unabhängig von den Rollmitteln (21), die konfiguriert sind, um das Gerüst (120) auf dem Boden abzustützen.

8. Bewegliche Basis (2) nach Anspruch 7, wobei die Feinverlagerungsmittel (127) Rollkugeln (128) aufweisen.

9. Bewegliche Basis (2) nach einem der Ansprüche 1 bis 8, wobei die seitlichen Schenkel (122) konfiguriert sind, um mindestens 200 cm, vorzugsweise mindestens 250 cm beabstandet zu sein.

10. Bewegliche Basis (2) nach einem der Ansprüche 1 bis 9, wobei die Feinverlagerungsmittel (129) eine Vielzahl von Pleuel (1290) aufweisen, die konfiguriert sind, um eine Feinverlagerung in mehreren Richtungen in der Art einer Schaukel oder eines Pendels zu ermöglichen.

11. Bewegliche Basis (2) nach Anspruch 10, wobei die Pleuel (129) konfiguriert sind, um eine Verlagerung in der horizontalen Ebenen von mindestens 10 mm in Bezug auf eine Gleichgewichtsposition zu gestatten.

12. Bewegliche Basis (2) nach einem der Ansprüche 10 bis 11, wobei die Enden jedes Pleuels (1290) durch eine Kugelgelenkverbindung verbunden sind.

13. Bewegliche Basis (2) nach einem der Ansprüche 10 bis 12, wobei jeder Pleuel (1290) eine Länge zwischen 250 mm und 450 mm besitzt.

14. Bewegliche Basis (2) nach einem der Ansprüche 10 bis 13, wobei jeder Hubarm eine Platte (105) und zwei Hubmechanismen (104) aufweist, die mit den Enden der Platte (105) verbunden sind, wobei jeder Hubmechanismus (104) mit einem Ende der Platte (105) durch zwei Pleuel (1290) verbunden ist.

15. Verfahren zum Transport (C) einer Ausrüstung mittels einer beweglichen Basis (2) nach einem der Ansprüche 1 bis 14, wobei das Verfahren aufweist:
- einen Schritt des Positionierens der seitlichen Schenkel (122) des Gerüsts (120) derart, dass sich die Ausrüstung zwischen den seitlichen Schenkeln (122) befindet;
- einen Schritt des Annäherns der seitlichen Schenkel (122) derart, dass sie mit der Ausrüstung zusammenwirken;
- einen Schritt des Hebens der Ausrüstung mit den Hubmitteln (103), damit die Ausrüstung von der beweglichen Basis (2) gestützt wird, und
- einen Schritt des Verlagerns der beweglichen Basis (2) auf dem Boden derart, dass die Ausrüstung verlagert wird.

## Claims

1. A mobile base (2) for transporting equipment on the ground, in particular an aeronautical equipment, the mobile base (2) includes a framework (120) comprising two side branches (122) adapted to move in parallel to each other so as to modify their spacing and rolling means (21) on the ground connected to said framework (120), each side branch (122) including lifting means (103) configured to move vertically and tilt equipment located between said side branches (122), which mobile base is **characterised in that** the lifting means (103) are in the form of a lifting arm, each lifting arm including a plate (105) and lifting mechanisms (104) connected to the ends of the plate (105) by fine movement means (129) configured to bring flexibility upon installing/removing the equipment.

2. The mobile base (2) according to claim 1, wherein the lifting means (103) of a side branch (122) include at least one lifting member (106) extending towards the other of both side branches (122).

3. The mobile base (2) according to claim 2, wherein the lifting member (106) extends at a height (h) from the ground between 0cm and 15cm when the lifting means (103) are lowered.

4. The mobile base (2) according to one of claims 2 and 3, wherein each side branch (122) includes at least two lifting members (106) spaced apart from each other along the length of said side branch (122).

5. The mobile base (2) according to one of claims 1 to 4, wherein the framework (120) has a U-shape defining a body (121) and two side branches (122).

6. The mobile base (2) according to one of claims 1 to 5, wherein the lifting means (103) of a side branch (122) include at least two independent lifting mechanisms (104) connected to said side branch (122) so as to allow tilting.

7. The mobile base (2) according to one of claims 1 to 6, including fine movement means (127), independent of the rolling means (21), configured to support the framework (120) on the ground.

8. The mobile base (2) according to claim 7, wherein the fine movement means (127) include bearing balls (128).

9. The mobile base (2) according to one of claims 1 to 8, wherein the side branches (122) are configured to be spaced apart by at least 200cm, preferably, at least 250cm.

10. The mobile base (2) according to one of claims 1 to 9, wherein the fine movement means (129) include a plurality of connecting rods (1290) configured to allow fine movement in several directions like a swing or a pendulum.

11. The mobile base (2) according to claim 10, wherein the connecting rods (129) are configured to permit a movement in the horizontal plane by at least 10mm with respect to a balance position.

12. The mobile base (2) according to one of claims 10 to 11, wherein the ends of each connecting rod (1290) are connected by a swivel.

13. The mobile base (2) according to one of claims 10 to 12, wherein each connecting rod (1290) has a length between 250mm and 450mm.

14. The mobile base (2) according to one of claims 10 to 13, wherein each lifting arm includes a plate (105) and two lifting mechanisms (104) connected to the ends of the plate (105), each lifting mechanism (104) is connected to one end of the plate (105) by two connecting rods (1290).

15. A method for transporting (C) equipment by means of a mobile base (2) according to one of claims 1 to 14, the method including:
- a step of positioning side branches (122) of the framework (120) such that the equipment is located between said side branches (122);
- a step of bringing the side branches (122) closer to each other so as to cooperate with said equipment;
- a step of lifting the equipment by the lifting means (103) such that said equipment is supported by said mobile base (2), and
- a step of moving said mobile base (2) on the ground so as to move said equipment.
